# EUROPEAN PATENT SPECIFICATION

(11) **EP 0 784 407 B1**
(45) Date of publication and mention of the grant of the patent: **17.10.2001**
(21) Application number: 96309374.5
(22) Date of filing: 20.12.1996
(51) Int. Cl.: H04N 7/30

(54) **Transform coefficient select method and apparatus for transform coding system**
Verfahren und Gerät zum Auswählen von Transformationskoeffizienten für ein Transformationskodierungssystem
Méthode et appareil de sélection de coefficients de transformée pour un système de codage par transformation

(30) Priority: 06.01.1996 KR 9600165
(43) Date of publication of application: 16.07.1997
(73) Proprietor: Samsung Electronics Co., Ltd., Suwon City, Kyungki-do (KR)
(72) Inventor: Chun, Kang-wook, Seoul (KR)
(74) Representative: Chugg, David John

(56) References cited:
- EP-A- 0 260 721
- US-A- 4 797 742
- US-A- 5 121 216
- RAMCHANDRAN K ET AL: "RATE-DISTORSION OPTIMAL FAST THRESHOLDING WITH COMPLETE JPEG/MPEG DECODER COMPATIBILITY" IEEE TRANSACTIONS ON IMAGE PROCESSING, vol. 3, no. 5, 1 September 1994, pages 700-704, XP000476844
- PETERSON H A ET AL: "AN IMPROVED DETECTION MODEL FOR DCT COEFFICIENT QUANTIZATION" PROCEEDINGS OF THE SPIE, vol. 1913, 1 February 1993, pages 191-201, XP000195711
- WATSON A B: "PERCEPTUAL OPTIMIZATION OF DCT COLOR QUANTIZATION MATRICES" PROCEEDINGS OF THE INTERNATIONAL CONFERENCE ON IMAGE PROCESSING (IC, AUSTIN, NOV. 13 - 16, 1994, vol. 1 OF 3, 13 November 1994, INSTITUTE OF ELECTRICAL AND ELECTRONICS ENGINEERS, pages 100-104, XP000521940

## Description

The present invention relates to a transform coefficient select method for a transform coding system of a still image and a motion image and an apparatus therefor, and more particularly, to a transform coefficient select method for a transform coding system of a still image and a moving image and an apparatus therefor, in which a quality of a restored image can be far better enhanced by selecting a predetermined number of transform coefficients considering the amount of variation of the restored image with respect to the amount of bits generated by the selected coefficients.

According to development of a digital transmission medium, international standardization for storing and transmitting a digital image has been recently actively progressed. As a result of recent standardization, international standards with respect to a coding method for a still image and a moving image such as JPEG, MPEG-1 and MPEG-2 have been determined.

Generally, transform coding is performed in order to reduce the amount of data by removing redundancy of an image signal. In the transform coding, one image picture is divided into blocks each having a size of NxN pixels, and then transform coding is performed for every block to transform an image signal in a spatial region into a signal in a frequency region. Such transform coding chiefly concentrates a signal energy, that is, a transform coefficient value into a low frequency band. A discrete cosine transform (DCT) method is most widely used as the above transform coding. The transform coding also presents a coding technique for quantizing transform coefficients and variable-length-coding the quantized data to further compress the amount of data.

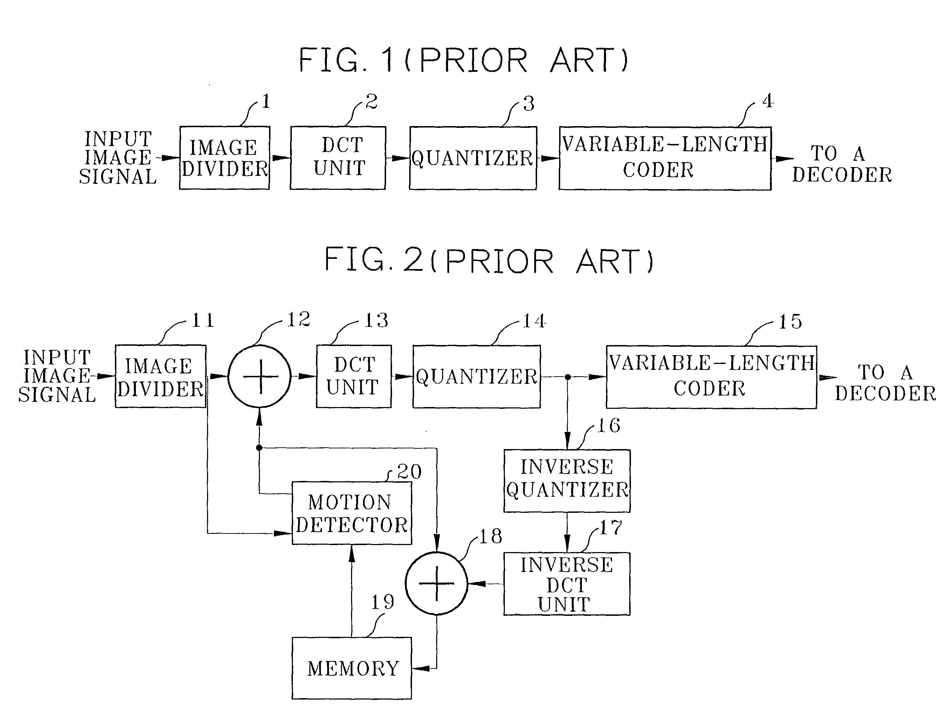

Figure 1 is a block diagram showing a constitution of JPEG standard which is internationally standardized as a still image coding system. In figure 1, an image divider 1 divides an image into blocks each having a size of NxN pixels and outputs the divided blocks. A DCT unit 2 discrete-cosine-transforms the input NxN blocks in two - dimensions to generated DCT coefficients. A quantizer 3 receives the DCT coefficients from the DCT unit 2 and quantizes the received DCT coefficients. A variable-length-coder 4 produces a variable-length code with respect to the quantized DCT coefficients, and transmits the variable-length code to a decoder (not shown) via a channel. The decoder receives the coded data and restores the original image via an inverse procedure.

Meanwhile, Figure 2 is a block diagram showing a constitution of MPEG standard which is internationally standardized as a moving image coding system. In Figure 2, an image divider 11 divides an input image into blocks each having a size of MxM pixels, and outputs the respective blocks to a motion detector 20 and an error generator 12. The motion detector 20 extracts a block which matches best a currently input MxM sized block from a previous image stored in a frame memory 19, via prediction of movement. The error generator 12 outputs a difference signal between a current input block and a predicted block output from the motion detector 20 to a DCT unit 13. The DCT unit 13 divides the MxM sized difference signal into NxN sized small blocks, and performs a DCT operation in the unit of an NxN sized block. The DCT transformed NxN coefficients are quantized in a quantizer 14 and the quantized signal is variable-length-coded in a variable-length-coder 15, to be transmitted to a decoder via a channel. Also, the quantized difference signals are restored via an inverse quantizer 16 and an inverse DCT unit 17, and the restored difference signal is added to a predicted block output from the motion detector 20 to then be stored in the frame memory 19.

However, the above still image coding apparatus and the moving image coding apparatus perform quantization with respect to the DCT coefficients and transmit non-zero quantization coefficients via a variable-length coder. Thus, since a step of selecting the DCT coefficients is not passed through, transmission coefficients are determined independently of a restored image, and transmission coefficients are determined without considering the amount of bits generated in the variable-length coder. Thus, the conventional method is inefficient in view of selection of a transform coefficient in that the amount of the bits generated by the transform coefficient and the amount of variation of the quality of a restored image due to the bit amount are not considered.

A paper by Ramchandran which appeared in IEEE Transactions on Image Processing, Volume III, No. 5, 1 September 1994, pages 700 to 704 and entitled "Rate-Distortion Optimal Fast Thresholding with Complete JPEG/MPEG Decoder Compatability" discloses a method for finding an optimal set of quantized DCT coefficients to be retained for each 8 by 8 block of an image or video frame such that the mean-squared-error distortion between the original image and a thresholded version is minimised subject to a maximum target coding bit rate constraint, or equivalently, the coding bit rate is minimized subject to a maximum allowable distortion constraint.

With a view to solving or reducing the above problem, it is an aim of embodiments of the present invention to provide a transform coefficient select method for a transform coding system and an apparatus therefor, in which a transform coding system can be optimized by selecting a predetermined number of transform coefficients considering the amount of variation of the restored image with respect to the amount of bits generated by the selected coefficients in the transform coding system.

According to a first aspect of the present invention, there is provided a coefficient selection apparatus for use in a transform coding system in which system an input image signal is divided into input blocks of a predetermined size, discrete cosine transformed and quantized prior to variable-length-coding, the coefficient selection apparatus comprising: bit amount calculation means for receiving quantized cosine transformed (DCT) coefficients, and calculating a number of bits constituting said discrete cosine transformed (DCT) coefficients; local decoding means for receiving said quantized DCT coefficients, restoring the DCT coefficients and producing a restored block; and a controller for receiving input blocks as well as restored blocks and selecting a predetermined number of said quantized discrete cosine transformed coefficients to be subsequently variable length coded, the selection of each particular quantized discrete cosine transformed coefficient of said predetermined number being achieved by considering an amount of a block variation due to an error between a restored block output from said local decoding means with respect to each transform coefficient and the input block, and an amount of a bit variation generated by selection of each transform coefficient, the apparatus being characterised in that the controller performs the following steps: (i) the controller selects all non-zero coefficients among the quantized DCT coefficients and establishes the selected coefficients as an initial coefficient set, and then counts the number of non-zero DCT coefficients, (ii) a degree of an image quality degradation generated in a restored block is calculated, by selectively setting each non-zero coefficient in turn to zero and determining the resulting degree of image quality degradation in a restored image, (iii) after step (ii) has been carried out for each non-zero coefficient, then a coefficient amongst the group of initially non-zero coefficients is selected whose degree of image quality degradation after setting to zero is lowest, and that selected coefficient is permanently set to be zero, (iv) next, steps (i) to (iii) are repeatedly carried out to successively remove those non-zero coefficients whose setting to zero causes least degradation in image quality, each time a non-zero coefficient is selected to be removed, a count value is updated until a remaining number of non-zero DCT coefficients becomes equal to a value "NUM1", where NUM1 is a value set by a user as being a maximum desired number of desired transform coefficients; and (v) the set of NUM1 remaining non-zero DCT coefficients are output for variable length coding.

According to a second aspect of the invention, there is provided a coefficient selection apparatus for use in a transform coding system in which system an input image signal is divided into input blocks of a predetermined size, discrete cosine transformed and quantized prior to variable-length-coding, the coefficient selection apparatus comprising: bit amount calculation means for receiving quantized cosine transformed (DCT) coefficients, and calculating a number of bits constituting said discrete cosine transformed (DCT) coefficients; local decoding means for receiving said quantized DCT coefficients, restoring the DCT coefficients and producing a restored block; and a controller for receiving input blocks as well as restored blocks and selecting a predetermined number of said quantized discrete cosine transformed coefficients to be subsequently variable length coded, the selection of each particular quantized discrete cosine transformed coefficient of said predetermined number being achieved by considering an amount of a block variation due to an error between a restored block output from said local decoding means with respect to each transform coefficient and the input block, and an amount of a bit variation generated by selection of each transform coefficient, the apparatus being characterised in that the controller performs the following steps: (i) the controller sets all coefficients among the quantized DCT coefficients to zero to form an initial coefficient set; (ii) a degree of image quality enhancement generated in a restored block is calculated, by selectively restoring any one of the initially non-zero coefficients in turn and determining the resulting degree of image quality enhancement in a restored image; (iii) after step (ii) has been carried out for each of the initially non-zero coefficients, then a coefficient amongst the group of initially non-zero coefficients is selected whose degree of image quality enhancement is the highest, and that selected coefficient is permanently restored; (iv) next, steps (i) to (iii) are repeatedly carried out to successively restore those initially non-zero coeffficients whose restoration causes a highest degree of enhancement in image quality, each time a non-zero coefficient is selected to be restored, a count value is updated until the count value becomes equal to a value "NUM2", where "NUM2" is a value set by a user as being a maximum desired number of transform coefficients; and (v) the set of NUM2 restored non-zero DCT coefficients are output for variable length coding.

According to a third aspect of the invention, there is provided a coefficient selection method for use in a transform coding system, in which system an input image signal is divided into input blocks of a predetermined size, discrete cosine transformed and quantized prior to variable-length coding, the coefficient selection method comprising the steps of: (i) selecting all non-zero coefficients among quantized discrete cosine transformed coefficients and establishing the selected coefficients as an initial coefficient set, and thereafter counting the number of non-zero discrete cosine transformed coefficients; (ii) calculating a degree of image quality degradation generated in a restored block, by selectively setting each non-zero coefficient in turn to zero and determining the resulting degree of image quality degradation in a restored image; (iii)after step (ii) has been carried out for each non-zero coefficient, then a coefficient amongst the group of initially non-zero coefficients is selected whose degree of image quality degradation after setting to zero is lowest, and that selected coefficient is permanently set to be zero; (iv) next, steps (i), to (iii) are repeatedly carried out to successively remove those non-zero coefficients whose setting to zero causes least degradation in image quality, each time a non-zero coefficient is selected to be removed, a count value being updated until a remaining number of non-zero discrete cosine transformed coefficients becomes equal to a value "NUM1", where NUM1 is a value set by a user as being a maximum desired number of desired transform coefficients; and (v) the set of NUM1 remaining non-zero discrete cosine transformed coefficients are output for variable length coding.

According to a fourth aspect of the invention, there is provided a coefficient selection method for use in a transform coding system, in which system an input image signal is divided into input blocks of a predetermined size, discrete cosine transformed and quantized prior to variable-length coding, the coefficient selection method comprising the steps of: (i) setting all coefficients among quantized discrete cosine transform coefficients to zero to form an initial coefficient set; (ii) calculating a degree of image quality enhancement generated in a restored block by selectively restoring any one of the initially non-zero coefficients in turn and determining the resulting degree of image quality enhancement in a restored image; (iii) after step (ii) has been carried out for each of the initially non-zero coefficients, then a coefficient amongst the group of initially non-zero coefficients is selected whose degree of image quality enhancement is the highest, and that selected coefficient is restored; (iv) next, steps (i) to (iii) are repeatedly carried out to successively restore those initially non-zero coefficients whose restoration causes a highest degree of enhancement in image quality, each time a non- zero coefficient is selected to be restored, a count value being updated until the count value becomes equal to a value "NUM2", where NUM2 is a value set by a user as being a maximum desired number of transform coefficients; and (v) the set of NUM2 restored non-zero discrete cosine transform coefficients are output for variable length coding.

For a better understanding of the invention, and to show how embodiments of the same may be carried into effect, reference will now be made, by way of example, to the accompanying diagrammatic drawings, in which:
Figure 1 is a block diagram showing a constitution of JPEG standard which is internationally standardized as a still image coding system;
Figure 2 is a block diagram showing a constitution of MPEG standard which is internationally standardized as a moving image coding system;
Figure 3 is a block diagram of a transform coding system according to an embodiment of the present invention;
Figure 4 is a detailed block diagram of a coefficient selector 50 shown in Figure 3;
Figure 5 is a flow-chart diagram for explaining a transform coefficient select method according to one embodiment of the present invention; and
Figure 6 is a flow-chart diagram for explaining a transform coefficient select method according to another embodiment of the present invention.

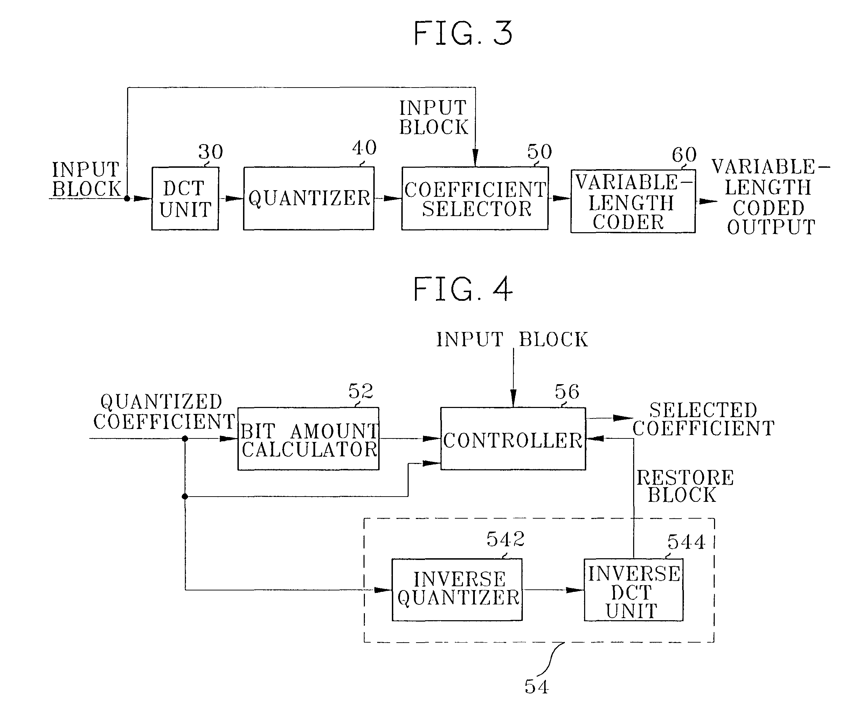

Preferred embodiments of the present invention will be described in detail with reference to the accompanying drawings Figures 3 through 7.

Figure 3 shows a transform coding system adopting a transform coefficient select method according to an embodiment of the present invention. As shown in Figure 3, a coefficient selector is located in the output end of a quantizer 40 and selects a predetermined number of quantized DCT coefficients and outputs the selected result. The coefficient selector 50 is connected to a variable-length coder 60 for receiving the selected coefficients and coding the received coefficients.

Figure 4 is a detailed block diagram of a coefficient selector 50 shown in Figure 3. As shown in Figure 4 the coefficient selector 50 includes a bit amount calculator 52 for receiving the transform coefficients quantized in the quantizer 40 and calculating a total amount of bits. The coefficient selector 50 also includes a local decoder 54 for receiving the quantized transform coefficients and generating a restored block. The local decoder 54 includes an inverse quantizer 542 and an inverse DCT unit 544. A controller 56 is connected to the output ends of the bit amount calculator 52 and the local decoder 54, to select and output transform coefficients considering an amount of variation of the quality of a restored image with respect to an amount of generated bits using the output signals of the bit amount calculator 52 and the local decoder 54.

An operation of the Figure 3 and 4 apparatus constructed as above will be described below.

The bit amount calculator 52 in the coefficient selector 50 calculates a total amount of bits of the quantized transform coefficients input from the quantizer 40. The local decoder 54 receives the transform coefficients, inversely quantizes the received transform coefficients, and inversely discrete cosine transforms the quantized transform coefficients to produce a restored block. The controller 56 receives the quantized transform coefficients, the total amount of bits of the transform coefficients from the bit amount calculator 52, the restored block from the local decoder 54 and an input block divided into an NxN size prior to begin discrete cosine transform, and selects and outputs a predetermined number of transform coefficients considering an amount of variation of a block due to an error between a block restored by each transform coefficient and the input block and an amount of variation of bits generated by selecting each transform coefficient.

A method for selecting a predetermined number of transform coefficients in the controller 56 will be described in detail in the following two embodiments.

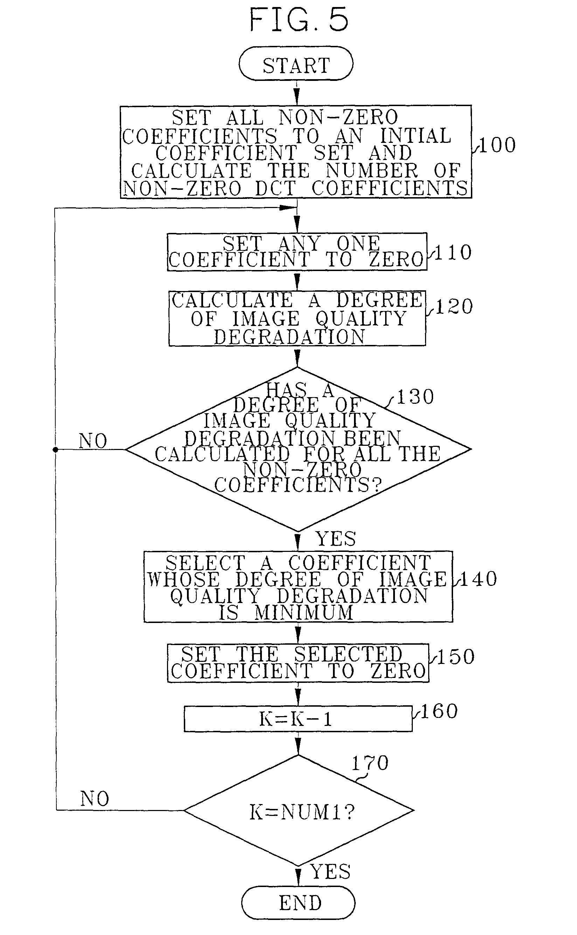

The operation of the controller 56 according to a first embodiment of the present invention will be described with reference to a flow-chart diagram shown in Figure 5.

The controller 56 selects all non-zero coefficients among the quantized DCT coefficients and establishes the selected coefficients as an initial coefficient set, and then counts the number of the non-zero DCT coefficients (step 100).

Then, a degree of an image quality degradation generated in a restored block is calculated (step 120), when each coefficient is set to zero with respect to the coefficients included in the initial coefficient set (step 110). The degree of the image quality degradation when each coefficient is set to zero is defined as a ratio of reduction of a bit amount with respect to an amount of variation of a quality of the restored image. For example, assuming that an amount of variation of a quality of the restored image is ΔD(i) when an i-th transform coefficient is set to zero and an amount of variation of bits is set to ΔB(i) due to the amount of variation of the image quality, a degree of the image quality degradation is -ΔD(i)/ΔB(i) when the i-th transform coefficient is set to zero.

Then, it is judged whether a degree of the image quality degradation as defined above with respect to the coefficients included in the initial coefficient set, that is, all the non-zero coefficients is calculated (step 130). If the degree of the image quality degradation with respect to all the non-zero coefficients is not calculated in the result of judgement, the operation is repetitively performed from step 100 to calculate the degree of the image quality degradation with respect to all the non-zero coefficients. If it is judged that the degree of the image quality degradation with respect to all the non-zero coefficients has been calculated in step 130, a coefficient whose degree of the image quality degradation is minimum is selected (step 140), and the coefficient selected among the transform coefficients is set to zero (step 150). A coefficient whose degree of the image quality degradation is minimum is one which affects an image quality at the least among the coefficients included in the initial coefficient set, that is, the non-zero DCT coefficients. Since a coefficient whose degree of the image quality degradation is minimum is set to zero, a corresponding coefficient is removed from the initial coefficient set, and a value of "K-1" obtained by subtracting "1" from a total number "K" of all the non-zero coefficients is made to the number "K" of all the non-zero DCT coefficients (step 160). Then, it is judged whether the number "K" of all the non-zero DCT coefficients equals a predetermined value "NUM1" (step 170). Here, "NUM1" is a value which is set by a user into the number of the transform coefficients which are selected and output in the coefficient selector 50. If the number "K" of all the non-zero DCT coefficients is larger than the "NUM1" in the result of judgement of step 170, the operation is repetitively performed from step 110 with respect to the remaining non-zero transform coefficients. If the number "K" of all the non-zero DCT coefficients equals the "NUM1" in the result of judgement of step 170, the coefficient selection is completed and the remaining non-zero DCT coefficients are output.

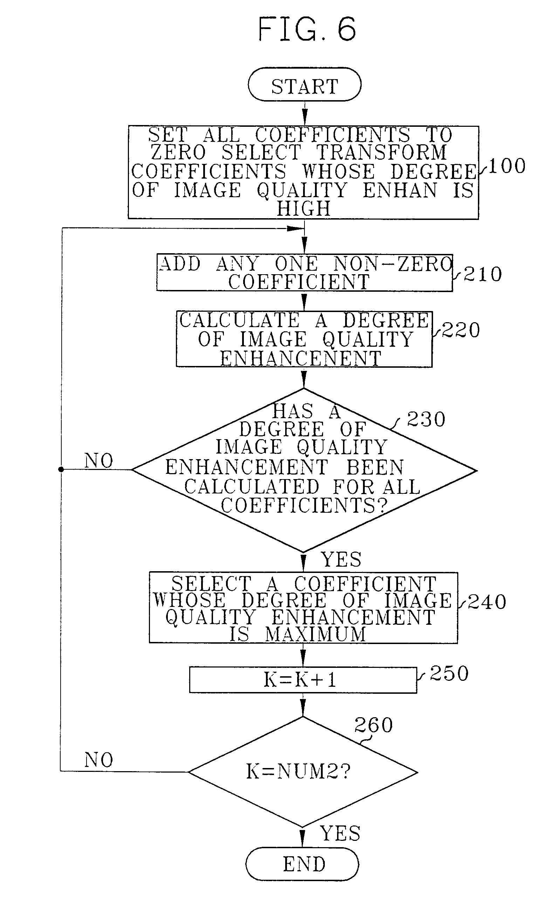

The operation of the controller 56 according to a second embodiment of the present invention will be described with reference to a flow-chart diagram shown in Figure 6.

In the first embodiment, the coefficients whose degree of the image quality degradation is low among the non-zero transform coefficients are removed, to output a predetermined number of the transform coefficients. However, in the second embodiment, all the transform coefficients are set to zero, and then the transform coefficients whose degree of the image quality enhancement is high are selected and output as many as a predetermined number. First, the controller 56 sets all the transform coefficients into zero (step 200). In this case, since all the transform coefficients are zero, the number "K" of non-zero transform coefficients is also zero. Then, any one of transform coefficients among the transform coefficients set to zero is transformed into a value of a prior-to-being-set original transform coefficient, to thereby add a non-zero transform coefficient (step 210). Then, a degree of an image quality enhancement is calculated with respect to the added transform coefficient (step 220). The degree of the image quality enhancement with respect to the added transform coefficient is defined as a mean square error between a block restored by the added transform coefficient and an input block and a ratio of an amount of increase of bits in this case. That is, assuming that a mean square error between a block restored by the added transform coefficient and an input block is ΔD(i) and a ratio of an amount of increase of bits in this case is ΔB(i), a degree of the image quality enhancement with respect to the added transform coefficient (i) is defined as -ΔD(i)/ΔB(i).

Then, it is judged whether a degree of the image quality enhancement as defined above with respect to all the coefficients which are set to zero in step 200 is calculated (step 230). If the degree of the image quality enhancement with respect to all the coefficients is not calculated in the result of judgement, the operation is repetitively performed from step 210 to calculate the degree of the image quality enhancement with respect to all the coefficients. If it is judged that the degree of the image quality enhancement with respect to all the coefficients which are set to zero has been calculated in step 230, a coefficient whose degree of the image quality enhancement is maximum is selected (step 240). A coefficient whose degree of the image quality at the maximum among the coefficients which have been set to zero. Since a coefficient whose degree of the image quality enhancement is maximum is selected, a corresponding coefficient is removed from the set which has been set to zero, and a value of "K+1" obtained by adding "1" to a total number "K" of all the non-zero coefficients is made to the number "K" of all the non-zero DCT coefficients (step 250). Then, it is judged whether the number "K" of all the non-zero DCT coefficients equals a predetermined value "NUM2" (step 260). Here, "NUM2" is a value which is set by a user into the number of the transform coefficients which are selected and output in the coefficient selector 50. If the number "K" of all the non-zero DCT coefficients is smaller than the "NUM2" in the result of judgement of step 260, the operation is repetitively performed from step 210 with respect to the remaining transform coefficients which have been set to zero. If the number "K" of all the non-zero DCT coefficients equals the "NUM2" in the result of judgement of step 260, the coefficient selection is completed and the remaining non-zero DCT coefficients are output.

The variable-length coder 60 variable-length-codes only the transform coefficients which are selected and output by the coefficient selector 50 in the same manner as the above-described method.

As described above, embodiments of the present invention provide an efficient transform coding system by selecting a predetermined number of transform coefficients considering an amount of variation of blocks due to an error between a block restored by each transform coefficient and an input block and an amount of variation of bits generated by selecting each transform coefficient, when quantized transform coefficients are selected.

While only certain embodiments of the invention have been specifically described herein, it will be apparent that numerous modifications may be made thereto without departing from the scope of the invention.

## Claims

1. A coefficient selection apparatus for use in a transform coding system in which system an input image signal is divided into input blocks of a predetermined size, discrete cosine transformed and quantized prior to variable-length-coding, the coefficient selection apparatus comprising:
bit amount calculation means (52) for receiving quantized cosine transformed (DCT) coefficients, and calculating a number of bits constituting said discrete cosine transformed (DCT) coefficients;
local decoding means (54) for receiving said quantized DCT coefficients, restoring the DCT coefficients and producing a restored block; and
a controller (56) for receiving input blocks as well as restored blocks and selecting a predetermined number of said quantized discrete cosine transformed coefficients to be subsequently variable length coded, the selection of each particular quantized discrete cosine transformed coefficient of said predetermined number being achieved by considering an amount of a block variation due to an error between a restored block output from said local decoding means (54) with respect to each transform coefficient and the input block, and an amount of a bit variation generated by selection of each transform coefficient, the apparatus being **characterised in that** the controller (56) performs the following steps:
(i) the controller selects all non-zero coefficients among the quantized DCT coefficients and establishes the selected coefficients as an initial coefficient set, and then counts the number of non-zero DCT coefficients,
(ii) a degree of an image quality degradation generated in a restored block is caclulated, by selectively setting each non-zero coefficient in turn to zero and determining the resulting degree of image quality degradation in a restored image,
(iii) after step (ii) has been carried out for each non-zero coefficient, then a coefficient amongst the group of initially non-zero coefficients is selected whose degree of image quality degradation after setting to zero is lowest, and that selected coefficient is permanently set to be zero,
(iv) next, steps (i) to (iii) are repeatedly carried out to successively remove those non-zero coefficients whose setting to zero causes least degradation in image quality, each time a non-zero coefficient is selected to be removed, a count value is updated until a remaining number of non-zero DCT coefficients becomes equal to a value "NUM1", where NUM1 is a value set by a user as being a maximum desired number of desired transform coefficients; and
(v) the set of NUM1 remaining non-zero DCT coefficients are output for variable length coding.

2. A coefficient selection apparatus for use in a transform coding system in which system an input image signal is divided into input blocks of a predetermined size, discrete cosine transformed and quantized prior to variable-length-coding, the coefficient selection apparatus comprising:
bit amount calculation means (52) for receiving quantized cosine transformed (DCT) coefficients, and calculating a number of bits constituting said discrete cosine transformed (DCT) coefficients;
local decoding means (54) for receiving said quantized DCT coefficients, restoring the DCT coefficients and producing a restored block; and
a controller (56) for receiving input blocks as well as restored blocks and selecting a predetermined number of said quantized discrete cosine transformed coefficients to be subsequently variable length coded, the selection of each particular quantized discrete cosine transformed coefficient of said predetermined number being achieved by considering an amount of a block variation due to an error between a restored block output from said local decoding means (54) with respect to each transform coefficient and the input block, and an amount of a bit variation generated by selection of each transform coefficient, the apparatus being **characterised in that** the controller (56) performs the following steps:
(i) the controller sets all coefficients among the quantized DCT coefficients to zero to form an initial coefficient set;
(ii) a degree of image quality enhancement generated in a restored block is calculated, by selectively restoring any one of the initially non-zero coefficients in turn and determining the resulting degree of image quality enhancement in a restored image;
(iii) after step (ii) has been carried out for each of the initially non-zero coefficients, then a coefficient amongst the group of initially non-zero coefficients is selected whose degree of image quality enhancement is the highest, and that selected coefficient is permanently restored;
(iv) next, steps (i) to (iii) are repeatedly carried out to successively restore those initially non-zero coeffficients whose restoration causes a highest degree of enhancement in image quality, each time a non-zero coefficient is selected to be restored, a count value is updated until the count value becomes equal to a value "NUM2", where "NUM2" is a value set by a user as being a maximum desired number of transform coefficients; and
(v) the set of NUM2 restored non-zero DCT coefficients are output for variable length coding.

3. A coefficient selection method for use in a transform coding system, in which system an input image signal is divided into input blocks of a predetermined size, discrete cosine transformed and quantized prior to variable-length coding, the coefficient selection method comprising the steps of:
(i) selecting all non-zero coefficients among quantized discrete cosine transformed coefficients and establishing the selected coefficients as an initial coefficient set, and thereafter counting the number of non-zero discrete cosine transformed coefficients;
(ii) calculating a degree of image quality degradation generated in a restored block, by selectively setting each non-zero coefficient in turn to zero and determining the resulting degree of image quality degradation in a restored image;
(iii) after step (ii) has been carried out for each non-zero coefficient, then a coefficient amongst the group of initially non-zero coefficients is selected whose degree of image quality degradation after setting to zero is lowest, and that selected coefficient is permanently set to be zero;
(iv) next, steps (i), to (iii) are repeatedly carried out to successively remove those non-zero coefficients whose setting to zero causes least degradation in image quality, each time a non-zero coefficient is selected to be removed, a count value being updated until a remaining number of non-zero discrete cosine transformed coefficients becomes equal to a value "NUM1", where NUM1 is a value set by a user as being a maximum desired number of desired transform coefficients; and
(v) the set of NUM1 remaining non-zero discrete cosine transformed coefficients are output for variable length coding.

4. A coefficient selection method for use in a transform coding system, in which system an input image signal is divided into input blocks of a predetermined size, discrete cosine transformed and quantized prior to variable-length coding, the coefficient selection method comprising the steps of:
(i) setting all coefficients among quantized discrete cosine transform coefficients to zero to form an initial coefficient set;
(ii) calculating a degree of image quality enhancement generated in a restored block by selectively restoring any one of the initially non-zero coefficients in turn and determining the resulting degree of image quality enhancement in a restored image;
(iii) after step (ii) has been carried out for each of the initially non-zero coefficients, then a coefficient amongst the group of initially non-zero coefficients is selected whose degree of image quality enhancement is the highest, and that selected coefficient is restored;
(iv) next, steps (i) to (iii) are repeatedly carried out to successively restore those initially non-zero coefficients whose restoration causes a highest degree of enhancement in image quality, each time a non- zero coefficient is selected to be restored, a count value being updated until the count value becomes equal to a value "NUM2", where NUM2 is a value set by a user as being a maximum desired number of transform coefficients; and
(v) the set of NUM2 restored non-zero discrete cosine transform coefficients are output for variable length coding.

## Patentansprüche

1. Koeffizienten-Auswahlvorrichtung zur Verwendung bei einem Transformationscodierungssystem, wobei bei dem System ein Eingangsbildsignal in Eingangsblöcke einer vorbestimmten Größe gereilt wird, diskret Kosinus transformiert wird und vor einer Codierung mit variabler Länge quantisiert wird, wobei die Koeffizienten-Auswahlvorrichtung folgende Merkmale aufweist:
eine Bitmengenberechnungseinrichtung (52) zum Empfangen von quantisierten Kosinus-transformierten (DCT) Koeffizienten und zum Berechnen einer Anzahl von Bits, die die diskreten Kosinus-transformierten (DCT) Koeffizienten bilden;
eine lokale Dekodierungseinrichtung (54) Empfangen der quantisierten DCT-Koeffizienten, zum Wiederherstellen der DCT-Koeffizienten und zum Erzeugen eines wiederhergestellten Blocks;
eine Steuerung (56) zum Empfangen von Eingangsblöcken sowie von wiederhergestellten Blöcken und zum Auswählen einer vorbestimmten Anzahl der quantisierten diskreten Kosinus-transformierten Koeffizienten, um anschließend mit variabler Länge codiert zu sein, wobei die Auswahl von jedem speziell quantisierten diskret Kosinus-transformierten Koeffizienten der vorbestimmten Anzahl durch Betrachten einer Menge einer Blockvariation aufgrund eines Fehlers zwischen einer wiederhergestellten Blockausgabe von der lokalen Decodierungseinrichtung (54) hinsichtlich jedes Transformationskoeffizienten und des Eingangsblocks und einer Menge einer Bitvariation, die durch Auswahl von jedem Transformationskoeffizienten erzeugt wird, erreicht wird, wobei die Vorrichtung **dadurch gekennzeichnet ist, dass** die Steuerung (56) die folgende Schritte durchführt:
(i) Auswählen von allen Nicht-Null-Koeffizienten aus den quantisierten DCT-Koeffizienten und Einrichten der ausgewählten Koeffizienten als ein Anfangskoeffizientensatz und dann Zählen der Anzahl von Nicht-Null-DCT-Koeffizienten durch die Steuerung,
(ii) Berechnen eines Grads einer Bildqualitätverschlechterung, die in einem wiederhergestellten Block erzeugt wird, durch selektives Einstellen von jedem Nicht-Null-Koeffizienten seinerseits auf Null und Bestimmen des resultierenden Grads der Bildqualitätsverschlechterung in einem wiederhergestellten Bild,
(iii) nach dem Durchführen des Schritts (ii) für jeden Nicht-Null-Koeffizienten, dann Auswählen eines Koeffizienten aus der Gruppe von anfänglich Nicht-Null-Koeffizienten, dessen Grad der Bildqualitätsverschlechterung nach dem Einstellen auf Null am niedrigsten ist, und dauerhaftes Einstellen dieses ausgewählten Koeffizienten auf Null,
(iv) dann wiederholtes Ausführen der Schritte (i) bis (iii), um aufeinanderfolgend die Nicht-Null-Koeffizienten zu entfernen, deren Einstellung auf Null die geringste Verschlechterung der Bildqualität verursacht, jedes Mal, wenn ein Nicht-Null-Koeffizient ausgewählt wird, um entfernt zu werden, Aktualisieren eines Zählwerts bis eine verbleibende Anzahl von Nicht-Null-DCT-Koeffizienten gleich einem Wert "NUM1" wird, wobei NUM1 ein Wert ist, der durch einen Benutzer als eine maximal gewünschte Anzahl von gewünschten Transformationskoeffizienten eingestellt wird;
(v) Ausgeben des Satzes von NUM1 verbleibenden Nicht-Null-DCT-Koeffizienten für eine Codierung mit variabler Länge.

2. Koeffizienten-Auswahlvorrichtung zur Verwendung bei einem Transformationscodierungssystem, wobei bei dem System ein Eingangsbildsignal in Eingangsblöcke einer vorbestimmten Größe geteilt wird, diskret Kosinus-transformiert wird und vor einer Codierung mit variabler Länge quantisiert wird, wobei die Koeffizienten-Auswahlvorrichtung folgende Merkmale aufweist:
eine Bitmengenberechnungseinrichtung (52) zum Empfangen von quantisierten Kosinus-transformierten (DCT) Koeffizienten und zum Berechnen einer Zahl von Bits, die die diskreten Kosinus-transformierten (DCT) Koeffizienten bilden,
eine lokale Decodierungseinrichtung (54) zum Empfangen der quantisierten DTC-Koeffizienten, zum Wiederherstellen der DCT-Koeffizienten und zum Erzeugen eines wiederhergestellten Blocks;
eine Steuerung (56) zum Empfangen von Eingangsblöcken sowie von wiederhergestellten Blöcken und zum Auswählen einer vorbestimmten Anzahl von quantisierten diskret Kosinus-transformierten Koeffizienten, um anschließend mit variabler Länge codiert zu sein, wobei die Auswahl von jedem speziell quantisierten diskret Kosinus-transformierten Koeffizienten der vorbestimmten Anzahl durch Betrachten einer Menge einer Blockvariation aufgrund eines Fehlers zwischen einer wiederhergestellten Blockausgabe von der lokalen Decodierungseinrichtung (54) hinsichtlich jedes Transformationskoeffizienten und des Eingangsblocks und einer Menge einer Bitvariation, die durch Auswahl von jedem Transformationskoeffizienten erzeugt wird, erreicht wird, wobei die Vorrichtung **dadurch gekennzeichnet ist, dass** die Steuerung (56) die folgende Schritte ausführt:
(i) Einstellen von allen Koeffizienten aus den quantisierten DCT-Koeffizienten auf Null, um einen Anfangskoeffizientensatz zu bilden, durch die Steuerung;
(ii) Berechnen eines Grads einer Bildqualitätsverbesserung, die bei einem wiederhergestellten Block erzeugt wird, durch selektives Wiederherstellen von einem der anfänglich Nicht-Null-Koeffizienten seinerseits und durch Bestimmen des resultierenden Grads der Bildqualitätsverbesserung bei einem wiederhergestellten Bild;
(iii) nach dem Ausführen des Schritts (ii) für jeden anfänglich Nicht-Null-Koeffizienten, dann Auswählen eines Koeffizienten aus der Gruppe von anfänglich Nicht-Null-Koeffizienten, dessen Grad der Bildqualitätsverbesserung am höchsten ist, und dauerhaftes Wiederherstellen dieses ausgewählten Koeffizienten;
(iv) dann wiederholtes Ausführen der Schritte (i) bis (iii), um aufeinanderfolgend diese anfänglich Nicht-Null-Koeffizienten wiederherzustellen, deren Wiederherstellung einen höchsten Grad der Verbesserung der Bildqualität verursacht, jedes Mal, wenn ein Nicht-Null-Koeffizient ausgewählt wird, um wiederhergestellt zu werden, Aktualisieren eines Zählwerts bis der Zählwert gleich einem Wert "NUM2" wird, wobei "NUM2" ein Wert ist, der durch einen Benutzer als eine maximal gewünschte Anzahl von Transformationskoeffizienten eingestellt wird; und
(v) Ausgeben des Satzes von NUM2 wiederhergestellten Nicht-Null-DCT-Koeffizienten für eine Codierung mit variabler Länge.

3. Koeffizienten-Auswahlverfahren zur Verwendung bei einem Transformationscodierungssystem, wobei bei dem System ein Eingangsbildsignal in Eingangsblöcke einer vorbestimmten Größe geteilt wird, diskret Kosinus-transformiert wird und vor der Codierung mit variabler Länge quantisiert wird, wobei das Koeffizienten-Auswahlverfahren folgende Schritte aufweist:
(i) Auswählen von allen Nicht-Null-Koeffizienten aus den quantisierten diskret Kosinus-transformierten Koeffizienten und Einrichten der ausgewählten Koeffizienten als ein Anfangskoeffizientensatz, und danach Zählen der Anzahl von diskret Kosinus-transformierten Nicht-Null-Koeffizienten;
(ii) Berechnen eines Grads der Bildqualitätsverschlechterung, die in einem wiederhergestellten Block erzeugt wird, durch selektives Einstellen von jedem Nicht-Null-Koeffizienten seinerseits auf Null und Bestimmen des resultierenden Grads der Bildqualitätsverschlechterung bei einem wiederhergestellten Bild;
(iii) nach dem der Schritt (ii) für jeden Nicht-Null-Koeffizienten ausgeführt ist, dann Auswählen eines Koeffizienten aus der Gruppe von anfänglich Nicht-Null-Koeffizienten, dessen Grad der Bildqualitätsverschlechterung nach dem Einstellen auf Null am niedrigsten ist, und dauerhaftes Einstellen dieses Koeffizienten auf Null;
(iv) dann wiederholtes Ausführen der Schritte (i) bis (iii) um aufeinanderfolgend diese Nicht-Null-Koeffizienten zu entfernen, deren Einstellung auf Null die geringste Verschlechterung der Bildqualität verursacht, jedes Mal, wenn ein Nicht-Null-Koeffizient ausgewählt ist, um entfernt zu werden, Aktualisieren eines Zählwerts bis eine verbleibende Anzahl von diskret Kosinus-transformierten Nicht-Null-Koeffizienten gleich einem Wert "NUM1" ist, wobei NUM1 ein Wert ist, der durch einen Benutzer als eine maximal gewünschte Anzahl von gewünschten Transformationskoeffizienten eingestellt ist;
(v) Ausgeben des Salzes von NUM1 verbleibenden diskret Kosinus-transformierten Nicht-Null-Koeffizienten für eine Codierung mit variabler Länge.

4. Koeffizienten-Auswahlverfahren zur Verwendung bei einem Transformationscodierungssystem, wobei bei dem System ein Eingangsbildsignal in Eingangsblöcke einer vorbestimmten Größe geteilt wird, diskret Kosinus-transformiert wird, und vor einer Codierung mit variabler Länge quantisiert wird, wobei das Koeffizienten-Auswahlverfahren folgende Schritte aufweist:
(i) Einstellen von allen Koeffizienten aus den quantisierten diskret Kosinus-transformierten Koeffizienten auf Null, um einen Anfangskoeffizientensatz zu bilden;
(ii) Berechnen eines Grads einer Bildqualitätsverbesserung, die bei einem wiederhergestellten Block erzeugt wird, durch selektives Wiederherstellen von einem der anfänglich Nicht-Null-Koeffizienten seinerseits und Bestimmen des resultierenden Grads der Bildqualitätsverbesserung bei einem wiederhergestellten Bild;
(iii) nach dem Ausführen des Schrittes (ii) für jeden der anfänglich Nicht-Null-Koeffizienten dann Auswählen eines Koeffizienten aus der Gruppe von anfänglich Nicht-Null-Koeffizienten, dessen Grad der Bildqualitätsverbesserung am höchsten ist, und Wiederherstellen dieses ausgewählten Koeffizienten;
(iv) dann Wiederholen der Schritte (ii) bis (iii), um aufeinanderfolgend diese anfänglich Nicht-Null-Koeffizienten wiederherzustellen, deren Wiederherstellung einen höchsten Grad einer Verbesserung der Bildqualität verursacht, jedes Mal, wenn ein Nicht-Null-Koeffizient ausgewählt ist, um wiederhergestellt zu werden, Aktualisieren eines Zählwerts bis der Zählwert gleich einem Wert "NUM2" ist, wobei NUM2 ein Wert ist, der durch einen Benutzer als die maximal gewünschte Anzahl von Transformationskoeffizienten eingestellt ist; und
(v) Ausgeben des Satzes von NUM2 wiederhergestellten diskret Kosinus-transformierten Nicht-Null-Koeffizienten für eine Codierung mit variabler Länge.

## Revendications

1. Appareil de sélection de coefficients destiné à être utilisé dans un système de codage par transformation, système dans lequel un signal d'image d'entrée est divisé en blocs d'entrée de taille prédéterminée, soumis à un calcul de transformée cosinus discrète et quantifié avant de subir un codage de longueur variable, l'appareil de sélection de coefficients comprenant :
un moyen de calcul de nombre de bits (52) servant à recevoir des coefficients de transformée cosinus (DCT) quantifiés et à calculer un nombre de bits constituant lesdits coefficients de transformée cosinus discrète (DCT);
un moyen de décodage local (54) servant à recevoir lesdits coefficients DCT quantifiés, à rétablir les coefficients DCT et à produire un bloc reconstitué; et
un organe de commande (56) servant à recevoir des blocs d'entrée ainsi que des blocs reconstitués et à sélectionner un nombre prédéterminé desdits coefficients de transformée cosinus discrète quantifiés destinés à subir ensuite un codage de longueur variable, la sélection de chaque coefficient de transformée cosinus discrète quantifié particulier dudit nombre prédéterminé étant réalisée compte tenu d'un degré de variation de bloc due à une erreur entre un bloc reconstitué délivré en sortie par ledit moyen de décodage local (54) en ce qui concerne chaque coefficient de transformée et le bloc d'entrée, et d'un degré de variation binaire générée par la sélection de chaque coefficient de transformée, l'appareil étant **caractérisé en ce que** l'organe de commande (56) exécute les étapes suivantes :
(i) l'organe de commande sélectionne tous les coefficients différents de zéro parmi les coefficients DCT quantifiés et établit les coefficients sélectionnés comme groupe de coefficients initiaux, puis compte le nombre de coefficients DCT différents de zéro,
(ii) un degré de dégradation de qualité d'image générée dans un bloc reconstitué est calculé, par la mise à zéro sélective à tour de rôle de chaque coefficient différent de zéro et la détermination du degré résultant de dégradation de la qualité d'image d'une image reconstituée,
(iii) après l'exécution de l'étape (ii) pour chaque coefficient différent de zéro, un coefficient est ensuite choisi dans le groupe de coefficients initialement différents de zéro, coefficient dont le degré de dégradation de qualité d'image après mise à zéro est minimal, et ce coefficient sélectionné est mis à zéro de manière permanente,
(iv) puis, les étapes (i) à (iii) sont exécutées de manière répétée pour éliminer successivement les coefficients différents de zéro dont la mise à zéro entraîne une dégradation minimale de la qualité d'image, une valeur de comptage étant, à chaque fois qu'un coefficient différent de zéro est sélectionné pour être éliminé, mise à jour jusqu'à ce qu'un nombre restant de coefficients DCT différents de zéro devienne égal à une valeur "NUM1", NUM1 étant une valeur fixée par un utilisateur comme nombre maximum voulu de coefficients de transformée souhaités; et
(v) le groupe de coefficients DCT différents de zéro restants NUM1 est délivré en sortie pour subir un codage de longueur variable.

2. Appareil de sélection de coefficients destiné à être utilisé dans un système de codage par transformation, système dans lequel un signal d'image d'entrée est divisé en blocs d'entrée de taille prédéterminée, soumis à un calcul de transformée cosinus discrète et quantifié avant de subir un codage de longueur variable, l'appareil de sélection de coefficients comprenant :
un moyen de calcul de nombre de bits (52) servant à recevoir des coefficients de transformée cosinus (DCT) quantifiés et à calculer un nombre de bits constituant lesdits coefficients de transformée cosinus discrète (DCT);
un moyen de décodage local (54) servant à recevoir lesdits coefficients DCT quantifiés, à rétablir les coefficients DCT et à produire un bloc reconstitué; et
un organe de commande (56) servant à recevoir des blocs d'entrée ainsi que des blocs reconstitués et à sélectionner un nombre prédéterminé desdits coefficients de transformée cosinus discrète quantifiés destinés à subir ensuite un codage de longueur variable, la sélection de chaque coefficient de transformée cosinus discrète quantifié particulier dudit nombre prédéterminé étant réalisée compte tenu d'un degré de variation de bloc due à une erreur entre un bloc reconstitué délivré en sortie par ledit moyen de décodage local (54) en ce qui concerne chaque coefficient de transformée et le bloc d'entrée, et d'un degré de variation binaire générée par la sélection de chaque coefficient de transformée, l'appareil étant **caractérisé en ce que** l'organe de commande (56) exécute les étapes suivantes :
(i) l'organe de commande met à zéro tous les coefficients parmi les coefficients DCT quantifiés pour former un groupe de coefficients initiaux;
(ii) un degré d'amélioration de qualité d'image générée dans un bloc reconstitué est calculé, par le rétablissement sélectif à tour de rôle de tous les coefficients initialement différents de zéro et la détermination du degré résultant d'amélioration de la qualité d'image d'une image reconstituée;
(iii) après l'exécution de l'étape (11) pour chacun des coefficients initialement différents de zéro, un coefficient est ensuite choisi dans le groupe de coefficients initialement différents de zéro, coefficient dont le degré d'amélioration de qualité d'image est maximal, et ce coefficient sélectionné est rétabli de manière permanente;
(iv) puis, les étapes (i) à (iii) sont exécutées de manière répétée pour rétablir successivement les coefficients initialement différents de zéro dont le rétablissement entraîne un degré maximal d'amélioration de la qualité d'image, une valeur de comptage étant, à chaque fois qu'un coefficient différent de zéro est sélectionné pour être rétabli, mise à jour jusqu'à ce qu'elle devienne égale à une valeur "NUM2", "NUM2" étant une valeur fixée par un utilisateur comme nombre maximum voulu de coefficients de transformée; et
(v) le groupe de coefficients DCT différents de zéro rétablis NUM2 est délivré en sortie pour subir un codage de longueur variable.

3. Méthode de sélection de coefficients destinée à être mise en oeuvre dans un système de codage par transformation, système dans lequel un signal d'image d'entrée est divisé en blocs d'entrée de taille prédéterminée, soumis à un calcul de transformée cosinus discrète et quantifié avant de subir un codage de longueur variable, la méthode de sélection de coefficients comprenant les étapes de :
(i) sélection de tous les coefficients différents de zéro parmi les coefficients de transformée cosinus discrète quantifiés et établissement des coefficients sélectionnés comme groupe de coefficients initiaux, puis comptage du nombre de coefficients de transformée cosinus discrète différents de zéro;
(ii) calcul d'un degré de dégradation de qualité d'image générée dans un bloc reconstitué, par la mise à zéro sélective à tour de rôle de chaque coefficient différent de zéro et la détermination du degré résultant de dégradation de la qualité d'image d'une image reconstituée;
(iii) après l'exécution de l'étape (ii) pour chaque coefficient différent de zéro, un coefficient est ensuite choisi dans le groupe de coefficients initialement différents de zéro, coefficient dont le degré de dégradation de la qualité d'image après mise à zéro est minimal, et ce coefficient sélectionné est mis à zéro de manière permanente;
(iv) puis, les étapes (i) à (iii) sont exécutées de manière répétée pour éliminer successivement les coefficients différents de zéro dont la mise à zéro entraîne une dégradation minimale de la qualité d'image, une valeur de comptage étant, à chaque fois qu'un coefficient différent de zéro est sélectionné pour être éliminé, mise à jour jusqu'à ce qu'un nombre restant de coefficients de transformée cosinus discrète différents de zéro devienne égal à une valeur "NUM1", NUM1 étant une valeur fixée par un utilisateur comme nombre maximum voulu de coefficients de transformée souhaités; et
(v) le groupe de coefficients de transformée cosinus discrète différents de zéro restants NUM1 est délivré en sortie pour subir un codage de longueur variable.

4. Méthode de sélection de coefficients destinée à être mise en oeuvre dans un système de codage par transformation, système dans lequel un signal d'image d'entrée est divisé en blocs d'entrée de taille prédéterminée, soumis à un calcul de transformée cosinus discrète et quantifié avant de subir un codage de longueur variable, la méthode de sélection de coefficients comprenant les étapes de :
(i) mise à zéro de tous les coefficients parmi les coefficients de transformée cosinus discrète quantifiés pour former un groupe de coefficients initiaux;
(ii) calcul d'un degré d'amélioration de qualité d'image générée dans un bloc reconstitué, par le rétablissement sélectif à tour de rôle de tous les coefficients initialement différents de zéro et la détermination du degré résultant d'amélioration de la qualité d'image d'une image reconstituée;
(iii) après l'exécution de l'étape (ii) pour chacun des coefficients initialement différents de zéro, un coefficient est ensuite choisi dans le groupe de coefficients initialement différents de zéro, coefficient dont le degré d'amélioration de la qualité d'image est maximal, et ce coefficient sélectionné est rétabli;
(iv) puis, les étapes (i) à (iii) sont exécutées de manière répétée pour rétablir successivement les coefficients initialement différents de zéro dont le rétablissement entraîne un degré maximal d'amélioration de la qualité d'image, une valeur de comptage étant, à chaque fois qu'un coefficient différent de zéro est sélectionné pour être rétabli, mise à jour jusqu'à ce qu'elle devienne égale à une valeur "NUM2", NUM2 étant une valeur fixée par un utilisateur comme nombre maximum voulu de coefficients de transformée; et
(v) le groupe de coefficients de transformée cosinus discrète différents de zéro rétablis NUM2 est délivré en sortie pour subir un codage de longueur variable.
